# EUROPEAN PATENT APPLICATION

(11) **EP 4 701 291 A1**
(43) Date of publication of application: **25.02.2026**
(21) Application number: 24791729.7
(22) Date of filing: 20.02.2024
(51) Int. Cl.: H04W 60/06

(54) **NETWORK REGISTRATION METHOD AND APPARATUS, AND STORAGE MEDIUM AND ELECTRONIC DEVICE**

(30) Priority: 21.04.2023 CN 202310433172
(71) Applicant: TCL Communication Technology (Chengdu) Limited, Chengdu, Sichuan 610000 (CN)
(72) Inventor: TAO, Cong, Chengdu, Sichuan 610000 (CN)
(74) Representative: Herrero & Asociados, S.L.
(86) International application number: PCT/CN2024/077846
(87) International publication number: WO 2024/217141

(57) **Abstract**

A network registration method and apparatus, and a storage medium and an electronic device, which relate to the technical field of communications. The method comprises: in response to entering a SGMM-deregistered.attempting-registration state, starting a registration timer and limiting the number of registration attempts; after a timeout of the registration timer, re-transmitting an NR network registration request; and if an entered new tracking area is in a prohibition list, stopping the re-transmission. By means of the method, a terminal can be prevented from repeatedly initiating invalid network registration requests.

## Description

This application claims the priority of Chinese Patent Application No. 2023104331727, entitled "NETWORK REGISTRATION METHOD AND APPARATUS, AND STORAGE MEDIUM AND ELECTRONIC DEVICE", filed on April 21, 2023, the disclosure of which is incorporated herein by reference in its entirety.

### FIELD OF THE DISCLOSURE

The present disclosure relates to the field of communication technologies, and in particular to a network registration method, device, storage medium, and electronic device.

### BACKGROUND

With the popularization of 5G terminals, under the condition of full coverage of an NR network, a terminal with the 5G mode enabled and a 5G service activated can generally access the NR network normally. However, in many cases, when the terminal attempts registration, the NR network does not respond, or the registration request is rejected by the NR network due to network congestion. In such a situation, according to the relevant protocol, the terminal will enter a 5GMM deregistered attempting-registration state (5GMM-DEREGISTERED.ATTEMPTING-REGISTRATION).

After the terminal enters this state in a current tracking area, a timer is started and a number of registration attempts is limited. When the timer expires, the terminal will again attempt to initiate a network registration request to access the network until an actual registration request count reaches the limited number of registration attempts.

### Technical problem

At present, the actual registration request count is often reset whenever the terminal enters a new tracking area, which prevents the registration request count from reaching the limited number of registration attempts. In this case, when the network does not respond to the terminal's access request, the terminal repeatedly initiates invalid NR network registration requests to access the NR network. As a result, the terminal cannot effectively connect to the network for a long time, leading to poor network reliability and severely affecting normal user communication.

### Technical Solution

The embodiments of the present disclosure provide a solution that can effectively avoid repeated initiation of invalid network registration requests caused by tracking area changes, thereby improving terminal network connection reliability and preventing adverse impact on normal user communication.

The embodiments of the present disclosure provide the following technical solution:
According to an embodiment of the present disclosure, a network registration method includes: in response to entering a 5GMM deregistration registration-attempt state in a current tracking area, starting a registration timer and limiting a number of registration attempts; when the registration timer expires, retransmitting an NR network registration request, wherein the number of registration attempts is a maximum number of retransmissions of the NR network registration request; detecting whether a new tracking area relative to the current tracking area is entered; when the new tracking area is entered and the new tracking area is in a forbidden list, stopping retransmission of the NR network registration request, turning off an NR mode, and searching and camping on a target LTE network, wherein the forbidden list stores tracking areas in which the NR network cannot be successfully registered after exceeding the number of registration attempts.

In some embodiments of the present disclosure, after retransmitting the NR network registration request when the registration timer expires, the method further comprises: accumulating one registration request count for each retransmission of the NR network registration request; when no new tracking area is entered, and the registration request count exceeds the number of registration attempts and no network registration acceptance message is received, adding the current tracking area to the forbidden list.

In some embodiments of the present disclosure, the method further includes: when the new tracking area is entered and the new tracking area is not in the forbidden list, initiating an NR network registration request after stopping the registration timer and resetting the registration request count.

In some embodiments of the present disclosure, the method further includes: turning off the NR mode and searching and camping on the target LTE network, after adding the current tracking area to the forbidden list.

In some embodiments of the present disclosure, a duration of the registration timer is a registration duration, and the registration duration and the number of registration attempts are determined based on one of the following manners: setting a predetermined duration as the registration duration, and setting a predetermined attempt number as the number of registration attempts; and determining the registration duration and the number of registration attempts according to a terminal scenario.

In some embodiments of the present disclosure, the determining the registration duration and the number of registration attempts according to the terminal scenario comprises: acquiring a scenario setting table; and querying preset duration and preset attempt number corresponding to the terminal scenario from the scenario setting table to obtain the registration duration and the number of registration attempts.

In some embodiments of the present disclosure, the determining the registration duration according to the terminal scenario comprises: acquiring a current area where a terminal is located; obtaining the registration duration and the number of registration attempts according to the terminal scenario and preset duration and preset attempt number corresponding to the current area of the terminal.

In some embodiments of the present disclosure, the tracking areas in the forbidden list comprise tracking areas in which the NR network cannot be successfully registered by the terminal locally after exceeding the number of registration attempts.

In some embodiments of the present disclosure, the forbidden list further comprises tracking areas in which other terminals located at a current location of the terminal cannot successfully register the NR network after exceeding the number of registration attempts within a predetermined time period.

In some embodiments of the present disclosure, the method further includes: after saving one tracking area into the forbidden list, starting a tracking area timer corresponding to the saved tracking area; and removing the saved tracking area from the forbidden list after the tracking area timer expires.

According to another embodiment of the present disclosure, a network registration device includes a starting module, a retransmission module, a detection module, and an initiation module. The starting module is configured to, in response to entering a 5GMM deregistration registration-attempt state in a current tracking area, start a registration timer and limit a number of registration attempts. The retransmission module is configured to retransmit an NR network registration request when the registration timer expires. The number of registration attempts is a maximum number of retransmissions of the NR network registration request. The detection module is configured to detect whether a new tracking area relative to the current tracking area is entered. The initiation module is configured to, when the new tracking area is entered and the new tracking area is in a forbidden list, stop retransmission of the NR network registration request, turn off an NR mode, and search and camp on a target LTE network, wherein the forbidden list stores tracking areas in which the NR network cannot be successfully registered after exceeding the number of registration attempts.

In some embodiments of the present disclosure, the device further includes an adding module configured to: after retransmitting the NR network registration request when the registration timer expires, accumulate one registration request count for each retransmission of the NR network registration request; and when no new tracking area is entered, and the registration request count exceeds the number of registration attempts and no network registration acceptance message is received, add the current tracking area to the forbidden list.

In some embodiments of the present disclosure, the device further includes a reset module configured to: when the new tracking area is entered and the new tracking area is not in the forbidden list, initiate an NR network registration request after stopping the registration timer and resetting the registration request count.

In some embodiments of the present disclosure, the device further includes a search module configured to turn off the NR mode and search and camp on the target LTE network wherein, after adding the current tracking area to the forbidden list.

In some embodiments of the present disclosure, a duration of the registration timer is a registration duration, and the device further comprises a duration-and-attempt-number determination module, configured to determine the registration duration and the number of registration attempts based on one of the following manners: setting a predetermined duration as the registration duration, and setting a predetermined attempt number as the number of registration attempts; or determining the registration duration and the number of registration attempts according to a terminal scenario.

In some embodiments of the present disclosure, the duration-and-attempt-number determination module is configured to: acquire a scenario setting table; and query preset duration and preset attempt number corresponding to the terminal scenario from the scenario setting table to obtain the registration duration and the number of registration attempts.

In some embodiments of the present disclosure, the duration-and-attempt-number determination module is configured to: acquire a current area where a terminal is located; and obtain the registration duration and the number of registration attempts according to the terminal scenario and preset duration and preset attempt number corresponding to the current area of the terminal.

In some embodiments of the present disclosure, the tracking areas in the forbidden list comprise tracking areas in which the NR network cannot be successfully registered by the terminal locally after exceeding the number of registration attempts.

According to another embodiment of the present disclosure, a storage medium stores computer program thereon. When the computer program is executed by a processor of a computer, the computer executes the method described in the embodiment of the present disclosure.

According to another embodiment of the present disclosure, an electronic device includes a memory storing computer program, and a processor executing the computer program to perform the method described in the embodiment of the present disclosure.

According to another embodiment of the present disclosure, a computer program product or a computer program includes a computer instruction stored in a computer-readable storage medium. A processor of a computer device reads the computer instruction from the computer-readable storage medium to perform the method provided in various optional implementations described in the embodiments of the present disclosure.

### Advantageous effects

In the embodiments of the present disclosure, a network registration method includes: in response to entering a 5GMM deregistration registration-attempt state in a current tracking area, starting a registration timer and limiting a number of registration attempts; when the registration timer expires, retransmitting an NR network registration request, wherein the number of registration attempts is a maximum number of retransmissions of the NR network registration request; detecting whether a new tracking area relative to the current tracking area is entered; when the new tracking area is entered and the new tracking area is in a forbidden list, stopping retransmission of the NR network registration request, turning off an NR mode, and searching and camping on a target LTE network, wherein the forbidden list stores tracking areas in which the NR network cannot be successfully registered after exceeding the number of registration attempts.

The advantageous effects of the present disclosure are as follows: after a terminal enters a 5GMM deregistered attempting-registration state in a current tracking area, the NR network registration request can be retransmitted. Furthermore, when it is detected that a newly entered tracking area is in a forbidden list, retransmission of the NR network registration request is stopped, the NR mode is turned off, and a target LTE network is searched and camped on. Since the forbidden list stores tracking areas in which the NR network cannot be successfully registered after exceeding the number of registration attempts, retransmission of the NR network registration request can be stopped in a timely and reliable manner, thereby enabling the terminal to quickly search and camp on other available LTE networks. This effectively avoids repeated initiation of invalid network registration requests caused by tracking area changes, improves terminal network connection reliability, and prevents adverse impact on normal user communication.

### BRIEF DESCRIPTION OF THE DRAWINGS

In order to more clearly illustrate the technical solutions in the embodiments of the present disclosure, the drawings required to be used in the description of the embodiments will be briefly introduced below, and it is obvious that the drawings described below are only some embodiments of the present disclosure, and for those skilled in the art, other drawings can be acquired according to these drawings without creative labor.
FIG. 1 illustrates a flowchart of a network registration method according to one embodiment of the present disclosure.
FIG. 2 illustrates a block diagram of a network registration device according to one embodiment of the present disclosure.
FIG. 3 illustrates a block diagram of an electronic device according to one embodiment of the present disclosure.

### DETAILED DESCRIPTION OF THE PRESENT DISCLOSURE

The embodiments of the present disclosure will be described clearly and completely below with reference to the accompanying drawings. It is apparent that the described embodiments are only a part of the embodiments of the present disclosure, and not all of the embodiments. Based on the embodiments of the present disclosure, all other embodiments obtained by those skilled in the art without creative efforts shall fall within the scope of protection of the present disclosure.

Normally, under the condition of full NR network coverage, a terminal with the 5G mode enabled and the 5G service activated can generally access the NR network normally. However, in regions such as international roaming areas or high-speed roads where location updates occur frequently, situations may arise in which the terminal, after detecting the NR network and attempting registration, receives no response from the network or has its registration request rejected by the network due to NR network congestion. In such cases, according to the protocol, the terminal enters a 5GMM deregistered attempting-registration state (5GMM-DEREGISTERED.ATTEMPTING-REGISTRATION).

According to the protocol, after the terminal enters the 5GMM deregistered attempting-registration state in a current tracking area, a timer is started and a number of registration attempts is limited. When the timer expires, the terminal will again attempt to initiate a network registration request to access the network until an actual registration request count reaches the limited number of registration attempts. However, in practice, it is often found that the registration request count is always reset when the terminal enters a new tracking area, which prevents the registration request count from reaching the limited number of registration attempts. In this case, when the network does not respond to the terminal's access request, the terminal will repeatedly initiate invalid NR network registration requests to access the NR network. As a result, the terminal cannot effectively connect to the network for a long time, leading to poor network reliability and severely affecting normal user communication.

The present disclosure provides a network registration method for solving the above problem, which can effectively avoid repeated initiation of invalid network registration requests caused by tracking area changes, improve terminal network connection reliability, and prevent adverse impact on normal user communication.

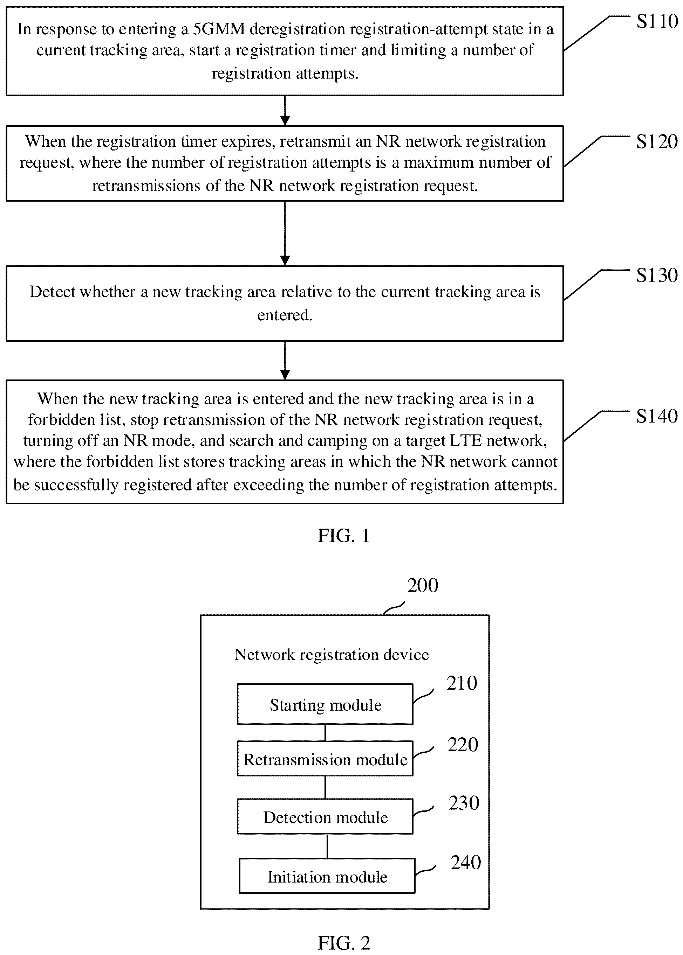

Referring to FIG. 1, FIG. 1 illustrates a flowchart of a network registration method according to one embodiment of the present disclosure. The execution subject of the network registration method may be any terminal with communication capability, such as a mobile phone, a smart watch, a computer, or an in-vehicle terminal.

As shown in FIG. 1, the network registration method may comprise steps S110 to S140.

Step S110: in response to entering a 5GMM deregistered attempting-registration state in a current tracking area, starting a registration timer and limiting a number of registration attempts;
Step S120: when the registration timer expires, retransmitting an NR network registration request, wherein the number of registration attempts is a maximum number of retransmissions of the NR network registration request;
Step S130: detecting whether a new tracking area relative to the current tracking area is entered;
Step S140: when the new tracking area is entered and the new tracking area is in a forbidden list, stopping retransmission of the NR network registration request, turning off an NR mode, and searching and camping on a target LTE network, wherein the forbidden list stores tracking areas in which the NR network cannot be successfully registered after exceeding the number of registration attempts.

After the terminal enters the 5GMM deregistered attempting-registration state in the current tracking area, the registration timer is started and the number of registration attempts is limited. A duration of the registration timer is a registration duration. Only when the registration timer expires, that is, when the registration duration is exceeded, retransmission of the NR network registration request is allowed. The limited number of registration attempts represents the maximum number of times the NR network registration request can be retransmitted. When the number of retransmissions of the NR network registration request reaches the number of registration attempts, retransmission of the NR network registration request is stopped. However, in practice, the number of retransmissions of the NR network registration request is often reset due to entry into a new tracking area, and thus the limited number of registration attempts is never reached, resulting in continuous retransmissions of the NR network registration request.

In the present disclosure, when it is detected that a new tracking area is entered and it is determined that the new tracking area is in the forbidden list, retransmission of the NR network registration request is stopped, thereby promptly avoiding repeated retransmissions of the NR network registration request caused by entry into the new tracking area and saving energy consumption. Furthermore, by turning off the NR mode and searching and camping on the target LTE network, the terminal can access the target LTE network in a timely and effective manner, wherein the target LTE network may specifically be an LTE network that is searched and on which camping is possible. In addition, since the forbidden list stores tracking areas in which the NR network cannot be successfully registered after exceeding the number of registration attempts, retransmission of the NR network registration request can be reliably and promptly stopped, thereby avoiding repeated retransmissions that would not succeed in registering with the NR network. The tracking areas in the forbidden list may comprise tracking areas in which the NR network cannot be successfully registered by the terminal locally after exceeding the number of registration attempts, and may further comprise tracking areas in which other terminals located at a current position of the terminal cannot successfully register with the NR network after exceeding the number of registration attempts within a predetermined period of time. The forbidden list may specifically store a tracking area code (TAC) corresponding to each tracking area.

In this manner, based on steps S110 to S 140, after the terminal enters the 5GMM deregistered attempting-registration state in the current tracking area, the NR network registration request can be retransmitted. Furthermore, when it is detected that a newly entered tracking area is in the forbidden list, retransmission of the NR network registration request is stopped, and the NR mode is turned off while the target LTE network is searched and camped on. Since the forbidden list stores tracking areas in which the NR network cannot be successfully registered after exceeding the number of registration attempts, retransmission of the NR network registration request can be stopped in a timely and reliable manner, thereby allowing the terminal to quickly search and camp on other available LTE networks. This effectively avoids repeated initiation of invalid network registration requests caused by tracking area changes, improves terminal network connection reliability, and prevents adverse impact on normal user communication.

The following describes further optional specific embodiments of each step performed during network registration under the embodiment of FIG. 1.

In one embodiment, after retransmitting the NR network registration request when the registration timer expires, the method further comprises: accumulating one registration request count for each retransmission of the NR network registration request; and when no new tracking area is entered, and the registration request count exceeds the number of registration attempts and no network registration acceptance message is received from the NR network, adding the current tracking area to the forbidden list.

Locally at the terminal, one registration request count is accumulated after each retransmission of the NR network registration request. When no new tracking area is entered, and the registration request count exceeds the number of registration attempts and no network registration acceptance message is received from the NR network, the current tracking area is added to the forbidden list, which may serve as a reference for stopping retransmission of the NR network registration request.

In one embodiment, the method further comprises: when a new tracking area is entered and the new tracking area is not in the forbidden list, initiating an NR network registration request after stopping the registration timer and resetting the registration request count.

Specifically, when a new tracking area is entered and the new tracking area is not in the forbidden list, the terminal locally stops the registration timer and resets the registration request count, and then re-initiates the NR network registration request. After re-initiating the NR network registration request, when the terminal locally enters the 5GMM deregistered attempting-registration state again, the terminal locally may continue executing steps S110 to S 140.

In one embodiment, after adding the current tracking area to the forbidden list, the method further comprises: turning off an NR mode and searching and camping on a target LTE network.

When no new tracking area is entered, and the registration request count exceeds the number of registration attempts and no network registration acceptance message is received, the current tracking area is added to the forbidden list. In this case, the terminal locally may also choose to turn off the NR mode and search and camp on the target LTE network, so that the terminal can connect to the target LTE network in a timely manner, thereby improving network connection reliability and preventing adverse impact on normal user communication. The target LTE network may specifically be an LTE network that is searched and on which camping is possible.

In one embodiment, a duration of the registration timer is a registration duration, and a determination manner of the registration duration and the number of registration attempts comprises one of the following manners:
a first manner, in which a predetermined duration is set as the registration duration and a predetermined attempt number is set as the number of registration attempts; and
a second manner, in which the registration duration and the number of registration attempts are determined according to a terminal scenario.

In the first manner, the predetermined duration is set as the registration duration and the predetermined attempt number is set as the number of registration attempts, where the predetermined duration and the predetermined attempt number may be uniformly specified in advance without distinction of scenarios. In the second manner, the terminal scenario may comprise scenarios such as international roaming or traveling on a high-speed road. When the terminal is not registered to the network, the terminal scenario may be input by a user through voice or an interface. Determining the registration duration and the number of registration attempts according to the terminal scenario, as compared with uniformly specifying them in advance without distinction of scenarios, may further take into account changes of tracking areas, thereby improving terminal network connection reliability.

In one embodiment, determining the registration duration and the number of registration attempts according to the terminal scenario comprises: acquiring a scenario setting table; and querying a preset duration and a preset attempt number corresponding to the terminal scenario from the scenario setting table, so as to obtain the registration duration and the number of registration attempts.

The scenario setting table may store preset durations and preset attempt numbers corresponding to different scenarios. The preset duration and the preset attempt number corresponding to the terminal scenario may be queried from the scenario setting table. The queried preset duration and preset attempt number may be used as the registration duration and the number of registration attempts.

In one embodiment, determining the registration duration according to a terminal scenario comprises: acquiring a current area where the terminal is located; and obtaining the registration duration and the number of registration attempts according to a preset duration and a preset attempt number corresponding to the terminal scenario and the current area of the terminal.

When the terminal is not registered to the network, the current area of the terminal may be input by a user through voice or an interface. The current area of the terminal may be, for example, a certain highway or a certain region. A scenario setting table may store preset durations and preset attempt numbers corresponding to different scenarios and areas. The preset duration and preset attempt number corresponding to the terminal scenario and the current area of the terminal may be queried from the scenario setting table. The queried preset duration and preset attempt number may be used as the registration duration and the number of registration attempts.

In one embodiment, after saving a tracking area into the forbidden list, a tracking area timer corresponding to the saved tracking area may be started, for example with a duration of 12 hours. When the tracking area timer expires, the saved tracking area is removed from the forbidden list.

For facilitating a better implementation of the network registration method provided by the embodiments of the present disclosure, the embodiments of the present disclosure further provide a network registration device based on the above network registration method. The meanings of the terms are the same as those in the above network registration method, and specific implementation details may be referred to in the descriptions of the method embodiments. FIG. 2 illustrates a block diagram of a network registration device according to one embodiment of the present disclosure.

As shown in FIG. 2, a network registration device 200 may comprise:
a starting module 210, which may be configured to, in response to entering a 5GMM deregistered attempting-registration state in a current tracking area, start a registration timer and limit a number of registration attempts;
a retransmission module 220, which may be configured to, when the registration timer expires, retransmit an NR network registration request, wherein the number of registration attempts is a maximum number of retransmissions of the NR network registration request;
a detection module 230, which may be configured to detect whether a new tracking area relative to the current tracking area is entered;
an initiation module 240, which may be configured to, when the new tracking area is entered and the new tracking area is in a forbidden list, stop retransmission of the NR network registration request, turn off an NR mode, and search and camp on a target LTE network, wherein the forbidden list stores tracking areas in which the NR network cannot be successfully registered after exceeding the number of registration attempts.

In some embodiments of the present disclosure, after retransmitting the NR network registration request when the registration timer expires, the device further comprises an adding module, configured to: accumulate one registration request count for each retransmission of the NR network registration request; and when no new tracking area is entered, and the registration request count exceeds the number of registration attempts and no network registration acceptance message is received, add the current tracking area to the forbidden list.

In some embodiments of the present disclosure, the device further comprises a reset module, configured to: when a new tracking area is entered and the new tracking area is not in the forbidden list, initiate an NR network registration request after stopping the registration timer and resetting the registration request count.

In some embodiments of the present disclosure, after adding the current tracking area to the forbidden list, the device further comprises a search module, configured to: turn off the NR mode and search and camp on the target LTE network.

In some embodiments of the present disclosure, a duration of the registration timer is a registration duration, and the device further comprises a duration-and-attempt-number determination module, configured to implement one of the following manners: setting a predetermined duration as the registration duration and setting a predetermined attempt number as the number of registration attempts; or determining the registration duration and the number of registration attempts according to a terminal scenario.

In some embodiments of the present disclosure, the duration-and-attempt-number determination module is configured to: acquire a scenario setting table; and query a preset duration and a preset attempt number corresponding to the terminal scenario from the scenario setting table, so as to obtain the registration duration and the number of registration attempts.

In some embodiments of the present disclosure, the duration-and-attempt-number determination module is configured to: acquire a current area where the terminal is located; and obtain the registration duration and the number of registration attempts according to a preset duration and a preset attempt number corresponding to the terminal scenario and the current area of the terminal.

It should be noted that, although a plurality of modules or units of the device for performing actions have been mentioned in the detailed description above, such division is not mandatory. In fact, according to the embodiments of the present disclosure, the features and functions of two or more of the modules or units described above may be embodied in one module or unit. Conversely, the features and functions of one of the modules or units described above may further be divided into multiple modules or units.

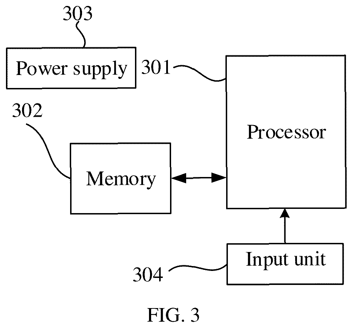

In addition, the embodiments of the present disclosure further provide an electronic device, which may be a terminal or a server. FIG. 3 illustrates a schematic structural diagram of an electronic device involved in the embodiments of the present disclosure. Specifically, the electronic device may include: a processor 301 with one or more processing cores, a memory 302 comprising one or more computer-readable storage media, a power supply 303, and an input unit 304, among other components.

Those skilled in the art will understand that the structure of the electronic device shown in FIG. 3 does not constitute a limitation on the electronic device. The electronic device may include more or fewer components than illustrated, or combine certain components, or adopt different component arrangements.

The processor 301 serves as the control center of the electronic device. It connects various parts of the device through various interfaces and lines, and, by running or executing software programs and/or modules stored in the memory 302, as well as calling data stored in the memory 302, performs various functions of the device and processes data, thereby providing overall control of the electronic device.

Optionally, the processor 301 may comprise one or more processing cores. Preferably, the processor 301 may integrate an application processor and a modem processor, where the application processor mainly processes the operating system, user interfaces, and application programs, while the modem processor mainly processes wireless communication. It is understood that the modem processor may alternatively not be integrated into the processor 301.

The memory 302 may be used to store software programs and modules, and the processor 301 executes various functional applications and data processing by running the software programs and modules stored in the memory 302. The memory 302 may mainly include a program storage area and a data storage area, where the program storage area may store an operating system and at least one application program required for a function (such as an audio playback function, an image playback function, and the like); and the data storage area may store data created according to the use of the electronic device. In addition, the memory 302 may include high-speed random access memory, as well as non-volatile memory, such as at least one disk storage device, flash memory device, or other non-volatile solid-state storage devices. Accordingly, the memory 302 may further comprise a memory controller configured to provide access of the processor 301 to the memory 302.

The electronic device further comprises a power supply 303 configured to supply power to the various components. Preferably, the power supply 303 may be logically connected to the processor 301 through a power management system, thereby enabling the power management system to perform functions such as managing charging, discharging, and power consumption management. The power supply 303 may further include one or more direct-current or alternating-current power sources, rechargeable systems, power failure detection circuits, power converters or inverters, power status indicators, and the like.

The electronic device may further comprise an input unit 304 configured to receive digital or character information, and to generate input signals related to user settings and function control, such as signals from a keyboard, mouse, joystick, optical input device, or trackball.

Although not shown, the electronic device may further comprise a display unit and the like, which are not described in detail herein. Specifically, in the present embodiment, a processor 301 in the electronic device loads into a memory 302 executable files corresponding to one or more processes of a computer program according to the following instructions, and the processor 301 runs the computer program stored in the memory 302, so as to implement various functions in the foregoing embodiments of the present disclosure. For example, the processor 301 may execute the following steps: in response to entering a 5GMM deregistered attempting-registration state in a current tracking area, starting a registration timer and limiting a number of registration attempts; when the registration timer expires, retransmitting an NR network registration request, wherein the number of registration attempts is a maximum number of retransmissions of the NR network registration request; detecting whether a new tracking area relative to the current tracking area is entered; when the new tracking area is entered and the new tracking area is in a forbidden list, stopping retransmission of the NR network registration request, turning off an NR mode, and searching and camping on a target LTE network, wherein the forbidden list stores tracking areas in which the NR network cannot be successfully registered after exceeding the number of registration attempts.

In some embodiments of the present disclosure, after retransmitting the NR network registration request when the registration timer expires, the method further comprises: accumulating one registration request count for each retransmission of the NR network registration request; and when no new tracking area is entered, and the registration request count exceeds the number of registration attempts and no network registration acceptance message is received, adding the current tracking area to the forbidden list.

In some embodiments of the present disclosure, the method further comprises: when a new tracking area is entered and the new tracking area is not in the forbidden list, initiating an NR network registration request after stopping the registration timer and resetting the registration request count.

In some embodiments of the present disclosure, after adding the current tracking area to the forbidden list, the method further comprises: turning off the NR mode and searching and camping on the target LTE network.

In some embodiments of the present disclosure, a duration of the registration timer is a registration duration, and the method further comprises one of the following manners: setting a predetermined duration as the registration duration and setting a predetermined attempt number as the number of registration attempts; or determining the registration duration and the number of registration attempts according to a terminal scenario.

In some embodiments of the present disclosure, determining the registration duration and the number of registration attempts according to the terminal scenario comprises: acquiring a scenario setting table; and querying a preset duration and a preset attempt number corresponding to the terminal scenario from the scenario setting table, so as to obtain the registration duration and the number of registration attempts.

In some embodiments of the present disclosure, determining the registration duration according to the terminal scenario comprises: acquiring a current area where the terminal is located; and obtaining the registration duration and the number of registration attempts according to a preset duration and a preset attempt number corresponding to the terminal scenario and the current area of the terminal.

It will be understood by those of ordinary skill in the art that all or part of the steps of the various methods of the above embodiments may be implemented by a computer program, or by relevant hardware controlled through a computer program. The computer program may be stored in a computer-readable storage medium and loaded and executed by a processor.

Accordingly, the embodiments of the present disclosure further provide a storage medium, in which a computer program is stored, where the computer program can be loaded by a processor to perform the steps of any of the methods provided by the embodiments of the present disclosure.

The storage medium may comprise: a Read Only Memory (ROM), a Random Access Memory (RAM), a disk, an optical disc, or the like.

Since the computer program stored in the storage medium may execute the steps of any of the methods provided by the embodiments of the present disclosure, the advantageous effects achievable by the methods provided by the embodiments of the present disclosure may also be realized. For details, reference is made to the foregoing embodiments, which will not be repeated herein.

Those skilled in the art, upon consideration of the specification and practice of the embodiments disclosed herein, will readily conceive of other embodiments of the present disclosure. The present disclosure is intended to cover any modifications, uses, or adaptive changes that follow the general principles of the present disclosure and include well-known knowledge or conventional technical means in the art not disclosed herein.

It should be understood that the present disclosure is not limited to the embodiments described above and illustrated in the accompanying drawings, but may be subject to various modifications and alterations without departing from the scope thereof.

## Claims

1. A network registration method, **characterized in that** the method comprises:
in response to entering a 5GMM deregistration registration-attempt state in a current tracking area, starting a registration timer and limiting a number of registration attempts;
when the registration timer expires, retransmitting an NR network registration request, wherein the number of registration attempts is a maximum number of retransmissions of the NR network registration request;
detecting whether a new tracking area relative to the current tracking area is entered;
when the new tracking area is entered and the new tracking area is in a forbidden list, stopping retransmission of the NR network registration request, turning off an NR mode, and searching and camping on a target LTE network, wherein the forbidden list stores tracking areas in which the NR network cannot be successfully registered after exceeding the number of registration attempts.

2. The method according to claim 1, wherein, after retransmitting the NR network registration request when the registration timer expires, the method further comprises:
accumulating one registration request count for each retransmission of the NR network registration request;
when no new tracking area is entered, and the registration request count exceeds the number of registration attempts and no network registration acceptance message is received, adding the current tracking area to the forbidden list.

3. The method according to claim 2, further comprising:
when the new tracking area is entered and the new tracking area is not in the forbidden list, initiating an NR network registration request after stopping the registration timer and resetting the registration request count.

4. The method according to claim 2, further comprising:
turning off the NR mode and searching and camping on the target LTE network, after adding the current tracking area to the forbidden list.

5. The method according to claim 1, wherein a duration of the registration timer is a registration duration, and the registration duration and the number of registration attempts are determined based on one of the following manners:
setting a predetermined duration as the registration duration, and setting a predetermined attempt number as the number of registration attempts; and
determining the registration duration and the number of registration attempts according to a terminal scenario.

6. The method according to claim 5, wherein the determining the registration duration and the number of registration attempts according to the terminal scenario comprises:
acquiring a scenario setting table; and
querying preset duration and preset attempt number corresponding to the terminal scenario from the scenario setting table to obtain the registration duration and the number of registration attempts.

7. The method according to claim 5, wherein the determining the registration duration according to the terminal scenario comprises:
acquiring a current area where a terminal is located;
obtaining the registration duration and the number of registration attempts according to the terminal scenario and preset duration and preset attempt number corresponding to the current area of the terminal.

8. The method according to claim 1, wherein the tracking areas in the forbidden list comprise tracking areas in which the NR network cannot be successfully registered by the terminal locally after exceeding the number of registration attempts.

9. The method according to claim 8, wherein the forbidden list further comprises tracking areas in which other terminals located at a current location of the terminal cannot successfully register the NR network after exceeding the number of registration attempts within a predetermined time period.

10. The method according to claim 1, further comprising:
after saving one tracking area into the forbidden list, starting a tracking area timer corresponding to the saved tracking area; and
removing the saved tracking area from the forbidden list after the tracking area timer expires.

11. A network registration device, comprising:
a starting module, configured to, in response to entering a 5GMM deregistration registration-attempt state in a current tracking area, start a registration timer and limit a number of registration attempts;
a retransmission module, configured to, when the registration timer expires, retransmit an NR network registration request, wherein the number of registration attempts is a maximum number of retransmissions of the NR network registration request;
a detection module, configured to detect whether a new tracking area relative to the current tracking area is entered; and
an initiation module, configured to, when the new tracking area is entered and the new tracking area is in a forbidden list, stop retransmission of the NR network registration request, turn off an NR mode, and search and camp on a target LTE network, wherein the forbidden list stores tracking areas in which the NR network cannot be successfully registered after exceeding the number of registration attempts.

12. The device according to claim 1, further comprising: an adding module configured to: after retransmitting the NR network registration request when the registration timer expires, accumulate one registration request count for each retransmission of the NR network registration request; and when no new tracking area is entered, and the registration request count exceeds the number of registration attempts and no network registration acceptance message is received, add the current tracking area to the forbidden list.

13. The device according to claim 12, further comprising a reset module configured to: when the new tracking area is entered and the new tracking area is not in the forbidden list, initiate an NR network registration request after stopping the registration timer and resetting the registration request count.

14. The device according to claim 12, further comprising a search module configured to turn off the NR mode and search and camp on the target LTE network wherein, after adding the current tracking area to the forbidden list.

15. The device according to claim 11, wherein a duration of the registration timer is a registration duration, and the device further comprises a duration-and-attempt-number determination module, configured to determine the registration duration and the number of registration attempts based on one of the following manners: setting a predetermined duration as the registration duration, and setting a predetermined attempt number as the number of registration attempts; or determining the registration duration and the number of registration attempts according to a terminal scenario.

16. The device according to claim 15, wherein the duration-and-attempt-number determination module is configured to: acquire a scenario setting table; and query preset duration and preset attempt number corresponding to the terminal scenario from the scenario setting table to obtain the registration duration and the number of registration attempts.

17. The device according to claim 15, wherein the duration-and-attempt-number determination module is configured to: acquire a current area where a terminal is located; and obtain the registration duration and the number of registration attempts according to the terminal scenario and preset duration and preset attempt number corresponding to the current area of the terminal.

18. The device according to claim 11, wherein the tracking areas in the forbidden list comprise tracking areas in which the NR network cannot be successfully registered by the terminal locally after exceeding the number of registration attempts.

19. A storage medium storing computer program executable by a processor of a computer to perform the method according to any one of claims 1 to 10.

20. An electronic device, comprising: a memory storing computer program, and a processor executing the computer program to perform the method according to any one of claims 1 to 10.
